Europäisches Patentamt

European Patent Office

Office européen des brevets

(11) Publication number: **0 162 331**
**A2**

# EUROPEAN PATENT APPLICATION

(21) Application number: **85105089.8**

(22) Date of filing: **26.04.85**

(51) Int. Cl.⁴: **G 05 G 11/00**
**H 01 H 3/12, B 65 H 29/00**

(30) Priority: **26.04.84 IT 2163684 U**

(43) Date of publication of application:
**27.11.85 Bulletin 85/48**

(84) Designated Contracting States:
**AT BE CH DE FR GB IT LI LU NL SE**

(71) Applicant: **Meschi, Luciano**
**Corso Amedeo 73**
**I-57100 Livorno(IT)**

(72) Inventor: **Meschi, Luciano**
**Corso Amedeo 73**
**I-57100 Livorno(IT)**

(74) Representative: **Füchsle, Klaus, Dipl.-Ing. et al,**
**Hoffmann . Eitle & Partner Patentanwälte**
**Arabellastrasse 4**
**D-8000 München 81(DE)**

(54) Service and security system for lines processing, printing, collecting, piling and transferring sheet material in continuous strip form.

(57) By duplication of the data processing and printing unit control panel (11) in a single control position on the receiving, piling and transfer apparatus (13), and by provision of mechanical elements (20a, 20b, 20c, 20d) controlled by said duplicate panel (15) actuating the controls of said unit (10), operation of the installation is made simple and safe.

Service and security system for lines processing, printing, collecting, piling and transferring sheet material in continuous strip form

The present invention relates to a service and security system for lines processing, printing, collecting, piling and transferring sheet material in continuous strip form.

It is well-known that in recent years data processing and accounting departments and the like have expanded greatly and become equipped with machines not only further evolved but operating at very high speed. Typical examples are fast so-called laser printers capable of handling thousands of forms in a few minutes. It is thus clear that the auxiliary operations such as feeding a new package of forms and/or automatic collection of printed forms coming out of the printer and then from the high-speed processing line contribute in a large measure to dead times and in the final analysis have a serious effect on the productivity of the entire line.

It is for this purpose that in very recent times equipment has been developed for the automatic splicing of the last sheet or tail of the package of forms being processed with the first sheet or form of the immediately following package. An example of such equipment is illustrated and described in U.S. patent no. 4421590.

Equipment has also been developed for the collection, piling and transfer of sheet material in continuous strip form coming from the printer an example of which is the subject of European patent application no. 83100975 dated 2 February 1983.

It can therefore be considered that even now a complete line for processing and printing data on sheet material in continuous strip form also includes equipment of the abovesaid type comprising respectively the inlet and the outlet of the line (apart from their physical location).

It is also known that all these pieces of equipment individually imply an electronic microprocessor control system so that linking them together normally implies an electronic interface card or panel which must differ depending on the type or make of the central processing unit.

The inconveniences of this situation are self-evident and imply considerable cost increases.

Another equally important problem presented by the line in question is tied to the very high operating speeds of the line so that emergency maintenance has heretofore required the continuous presence of an operator at each control panel and hence for each piece of equipment or unit and it is well known how much labour costs increase the total operating costs of such a line.

To this must be added the important problem that, given the delicacy of the electronic units which make up the processing and printing equipment, manufacturers and consequently users do not allow connection of such units to internal circuits because it could result in imbalances and very serious damage.

Consequently, a situation such as the unforeseen lack of paper (i.e. the continuous strip of forms) at the splicing unit inlet and/or any trouble whatsoever with the sheet material receiving, piling and transfer equipment (caused for example by jamming) cannot be automatically signalled to the control microprocessor of the aforesaid central processing and printing unit in order to stop its operation in a timely manner.

An object of the present invention is to provide a remedy for the inconveniences mentioned briefly above.

Another object of the present invention is to provide a service and safety system for continuous strip sheet material data processing and printing lines of the type comprising a central processing and printing unit and at least one receiving, piling and transfer apparatus for continuous strip sheet material coming from said central unit characterized in that it includes a first panel mating with the control panel of said central unit, said first panel being equipped with movable elements designed to press on command upon the pushbutton controls of said control panel, and a second panel located on said receiving, piling and transfer apparatus, said second panel being equipped with pushbuttons arranged in a manner identical to that of the control pushbuttons of said control panel and being connected with actuating devices for said movable elements.

According to a preferred embodiment of the system according to the invention said first panel is mounted in front of said control panel of said central unit at a distance such that actuation of said movable elements, for example pistons actuated by a solenoid device following a command given by said second panel, brings about mechanical actuation of the corresponding control panel of said central unit, said first panel furthermore being mounted in position by means of an arm rotating between an operating position such as the abovementioned one and a disengaged position in which it allows free access to said control panel.

The particular aspects and advantages of the present invention will appear more clearly from the following detailed

description made with reference to the annexed drawings:

Fig. 1 is a schematic view of the system according to one embodiment of the invention applied to a data processing and printing line;

Fig. 2 is a sectional view showing a detail of the system of Fig. 1; and

Fig. 3 is an illustration of the electrical connections.

With reference to the drawings reference 10 indicates schematically a central data processing and printing unit equipped with a control panel 11 in which four pushbuttons 12a, 12b, 12c and 12d are shown for convenience and simplicity of representation.

Reference 13 indicates an automatic receiving, piling and transfer apparatus for the continuous strip of forms (not shown) coming out of the printer 10 while reference 14 indicates the control panel of said apparatus 13.

Beside the panel 14 is mounted a control panel 15 identical to the control panel 11 of the unit 10 in such a manner that the related pushbuttons 16a, 16b, 16c and 16d correspond exactly to the pushbuttons 12 (a, b, c and d).

In front of the panel 11 of the unit 10 on a support 17 is mounted a rotating arm bearing a transducer device or panel 19 which faces toward the panel 11 with a plurality of pistons 20 (a, b, c and d) in a position exactly corresponding to the pushbuttons 12 (a, b, c and d), said pistons being movable between a withdrawn neutral position and a protruding operating position in which they press upon the corresponding pushbutton 12 in the same manner as the pushbuttons would be operated by the hand of an operator.

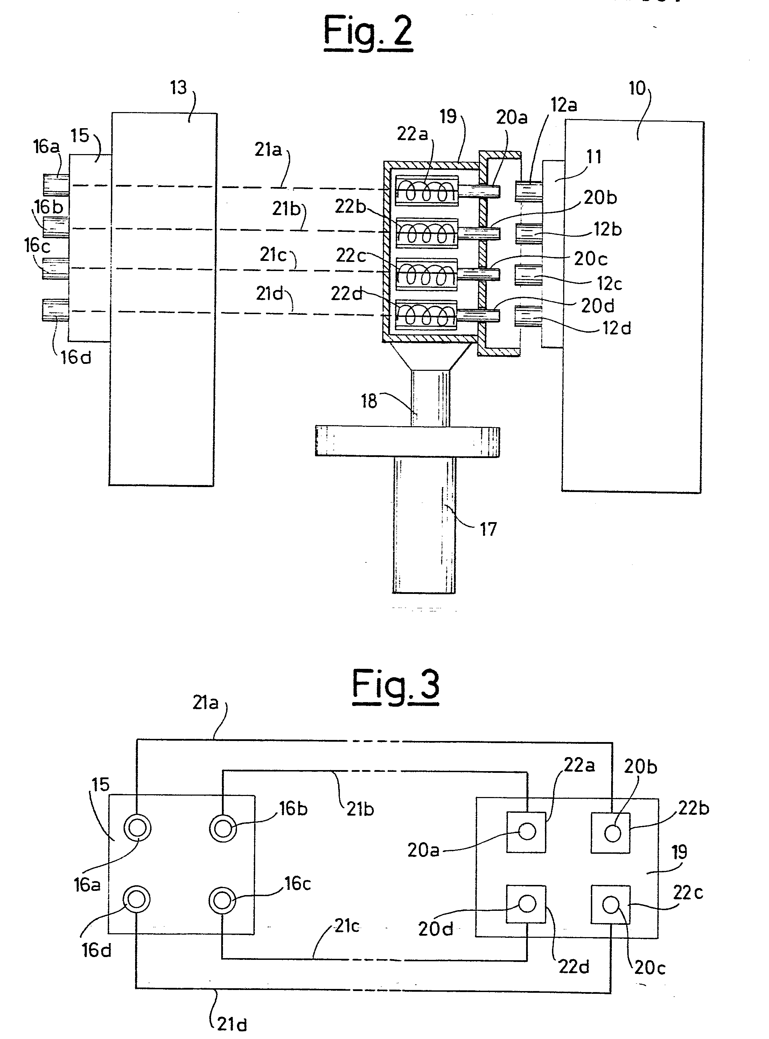

To actuate the pistons 20 (a, b, c and d) a solenoid device of the well-known type (represented schematically in Figs. 2 and 3 by reference 22 (a, b, c and d) is provided for each of them.

It is clear that an operator positioned at the apparatus 13 would be capable of supervising both the apparatus 13 and the unit 10 with no need to move and without interference with the data processing and printing unit circuitry.

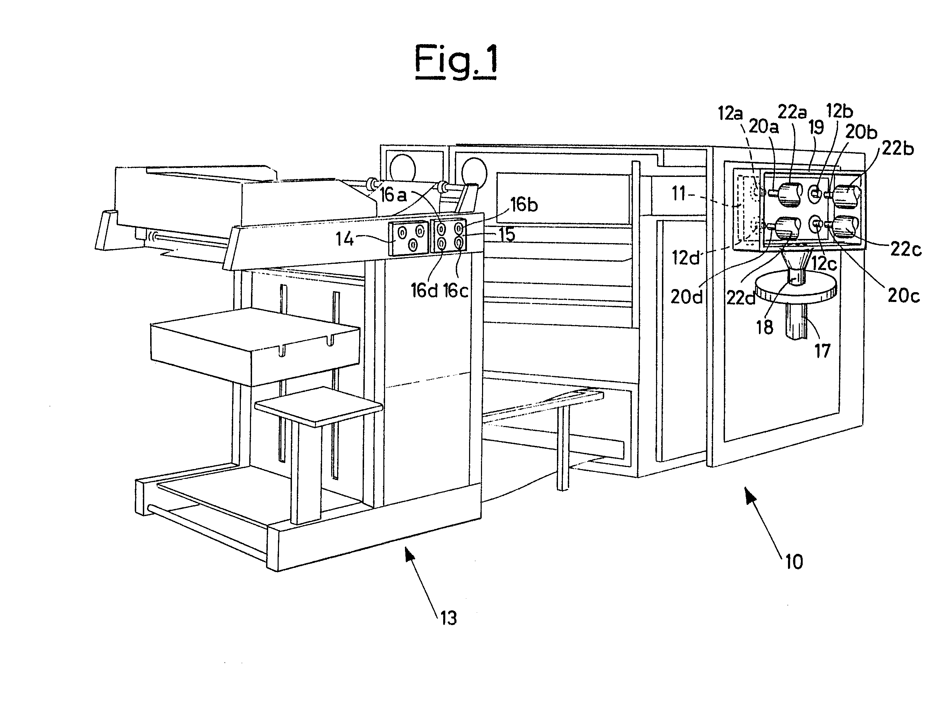

The arm 18 is in turn mounted in a well-known swinging manner between the operating position shown in Fig. 1 and a neutral position not shown and folded downward in which it allows completely unencumbered access to the control panel of the unit 10.

It is clear that instead of transferring the controls of the unit 10 onto the apparatus 13 the reverse operation or even the provision of a single control station duplicating the control panels of all the equipment making up the line would be possible with the advantage of not interfering with the circuitry and structures of the individual pieces of equipment and with the possibility of independently expanding or modifying the line without manipulating the other pieces of equipment which make it up.

Conceptually and mechanically equivalent modifications and variants are possible and can be provided within the limits of the invention.

For example it is possible to replace the solenoid actuators 22 with oleodynamic or pneumatic actuators or other equivalent devices.

Reference is hereby directed to my two copending European applications of even date (our references 41 893 and 41 936) EP-A-_____ and EP-A-_____.

## Claims

1. Service and safety system for lines processing and printing data on sheet material in continuous strip form of the type comprising a first apparatus unit (10) and a second apparatus unit (13) for sheet material in continuous strip form coming from said first unit (10) characterized by a first panel (19) mating with a control panel (11) of said first unit (10), said first panel being equipped with movable elements (20a, 20b, 20c, 20d) designed to press on command upon pushbutton controls (12a, 12b, 12c, 12d) of said control panel (11) and a second panel (15) located on said second unit (13) said second panel (15) being equipped with pushbuttons (16a, 16b, 16c, 16d) arranged in a position identical to that of the control pushbuttons (12a, 12b, 12c, 12d) of said control panel (11) and being connected with actuating devices (22a, 22b, 22c, 22d) for said movable elements.

2. System according to claim 1 characterized in that said movable elements are pistons (20a, 20b, 20c, 20d) movable between a neutral withdrawn position and a protruding operating position in which they engage and press upon the pushbuttons (16a, 16b, 16c, 16d) of said control panel (11) opposite, said actuating devices (22a, 22b, 22c, 22d) being of the solenoid type.

3. System according to claim 1 characterized in that said first panel (19) is mounted movably between an operating position in which it is located operationally in front of said control panel (11) and a neutral position in which it allows free access to said control panel (11).

0162331

4.  System according to any one of claims 1 to 3 wherein said first apparatus unit is a central processing and printing unit (10) and said second apparatus unit is at least one receiving, piling and transfer apparatus (13).

# Fig.1

0162331

2/2

0162331

Fig. 2

Fig. 3